Europäisches Patentamt

European Patent Office

Office européen des brevets

(11) Veröffentlichungsnummer: **0 423 612 A1**

# (12) EUROPÄISCHE PATENTANMELDUNG

(21) Anmeldenummer: 90119449.8

(22) Anmeldetag: 10.10.90

(51) Int. Cl.⁵: **C09D 5/34, C08J 3/07**

(30) Priorität: 19.10.89 DE 3934870
02.08.90 DE 4024551

(43) Veröffentlichungstag der Anmeldung:
**24.04.91 Patentblatt 91/17**

(84) Benannte Vertragsstaaten:
**GR**

(71) Anmelder: **Henkel Kommanditgesellschaft auf
Aktien
Postfach 1100 Henkelstrasse 67
W-4000 Düsseldorf-Holthausen(DE)**

(72) Erfinder: **Loth, Helmut
Ursula-Strasse 17
W-4300 Essen(DE)**
Erfinder: **Knop, Bernhard, Dr.
Robert-Koch-Strasse 10
W-4019 Monheim(DE)**
Erfinder: **Podola, Tore
Deusser Strasse 31
W-4019 Monheim(DE)**
Erfinder: **Helpenstein, Klaus
Flurstrasse 25
W-4050 Mönchengladbach(DE)**

(54) **Früh regenfeste Fugendichtungsmassen.**

(57) Beschrieben werden frühregenfeste Fugendichtungsmassen enthaltend
- wäßrige Polymerdispersionen (I)
- nicht-ionische Celluloseether (II) aus der von Hydroxyethyl-, Hydroxyethylmethyl-, Hydroxypropylmethyl- und Hydroxypropylcellulose gebildeten Gruppe
- gegebenenfalls übliche Zusätze wie Füllstoffe, Pigmente, Weichmacher, Extender, Verdickungsmittel, Entschäumer, Dispergierhilfsmittel, pH-Regulatoren, Konservierungs- und Alterungsschutzmittel sowie
- mindestens eine organische flüssige Komponente aus der Gruppe üblicher Zusätze
und herstellbar durch inniges Vermengen von (I) mit den übrigen Bestandteilen. Um (II) in Mengen einbringen zu können, die über der Löslichkeitsgrenze liegen, sind die Fugendichtungsmassen dadurch gekennzeichnet, daß (II) in retardierter und/oder nicht retardierter Form in der flüssigen organischen Komponente aufgeschlämmt zugegeben und untergemischt wird.

EP 0 423 612 A1

# FRÜH REGENFESTE FUGENDICHTUNGSMASSEN

Die Erfindung betrifft früh regenfeste Fugendichtungsmassen enthaltend
- wäßrige Polymerdispersionen (I)
- nicht-ionische Celluloseether (II) aus der von Hydroxyethyl-, Hydroxyethylmethyl-, Hydroxypropylmethyl- und Hydroxypropylcellulose gebildeten Gruppe
- gegebenenfalls übliche Zusätze wie Füllstoffe, Pigmente, Weichmacher, Extender, Verdickungsmittel, Entschäumer, Dispergierhilfsmittel, pH-Regulatoren, Konservierungs- und Alterungsschutzmittel sowie
- mindestens eine organische flüssige Komponente aus der Gruppe üblicher Zusätze
und herstellbar durch inniges Vermengen von (I) mit den übrigen Bestandteilen sowie ein Verfahren zur Herstellung derartiger Fugendichtungsmassen und deren Verwendung.

Fugendichtungsmassen sind dem Fachmann bekannt und haben sich in der Praxis bewährt. Problematisch ist der Einsatz von Fugendichtungsmasse in Bereichen wo die Möglichkeit bzw. die Gefahr besteht, daß die Fugendichtungsmasse vor dem Aushärten einer Wasserbelastung z.B. durch Spritzwasser oder Regen ausgesetzt ist. So werden viele der bislang auch im Außenbereich verwendeten Fugendichtungsmassen durch einen kurz nach ihrem Auftragen einsetzenden heftigen Regenguß ganz oder teilweise ausgewaschen. Aus der DE 38 14 078-A-1 ist die Verwendung von nicht-ionischen Celluloseethern in Fugendicht- bzw. Beschichtungsmassen auf Basis von Acrylatdispersionen bekannt. Durch den Einsatz von bestimmten Celluloseethern in diesen Massen soll das Auswaschverhalten durch die Einwirkung von Wasser wie Regenwasser sowie das Glättverhalten verbessert werden. Die dort eingesetzten Mengen der angegebenen Celluloseethertypen sind auf den Festkörpergehalt der Acrylatdispersion bezogen. Es wird keine explizite Angabe über das Verhältnis von "freiem" Wasser zu den Celluloseethern gemacht. Aus den Beispielen geht zwar hervor, daß die dort aufgeführten Bestandteile zur Herstellung einer Fugendichtungsmasse in einem Planetenmischer hergestellt wurden, jedoch findet man keine Angaben darüber, in welcher Form und Reihenfolge die einzelnen Bestandteile miteinander in Mischung gebracht werden.

Es hat sich jedoch in der Praxis erwiesen, daß bei derartigen frühregenfesten Fugendichtungsmassen die Zugabe der einzelnen Bestandteile sowie deren Form bei der Herstellung der Fugendichtungsmassen nicht beliebig ist. So lassen sich beispielsweise die genannten Celluloseether zwar im Labormaßstab in geringen Mengen in einige Polymerdispersionen einstreuen und lösen, jedoch nicht im Produktionsmaßstab und nicht in solchen Mengen, die bezogen auf das "freie" Wasser zu groß sind um eine vollständige Lösung zu erzielen. Bei einem solchen Versuch erhält man unweigerlich Klumpenbildung bzw. Brechen der Dispersion. Wenn es auch manchmal möglich ist, die Celluloseetherklumpen wieder zu homogenisieren, so ist es nicht machbar, einmal koagulierte Dispersionsteilchen wieder zu dispergieren. Auch bietet die DE 38 14 078-A-1 dem Fachmann keinen Hinweis darauf, daß derartige frühregenfeste Fugendichtungsmassen mit anderen wäßrigen Polymerdispersionen als den dort angegebenen Acrylatdispersionen herstellbar sind.

Nicht-ionische Celluloseether sind auch als Bestandteile von Beschichtungsmassen und Anstrichmitteln bekannt z.B. solchen auf Basis von wäßrigen Dispersionen von Organo-Polysiloxanen wie in der DE 12 84 007 beschrieben oder solchen auf Basis von Vinylacetat/Maleinsäuredibutylesterdispersionen wie in der DE 21 08 365 beschrieben. Dem kann der Fachmann jedoch keinen Hinweis entnehmen, daß derartige Celluloseether auch für Fugendichtungsmassen auf gleicher Polymerdispersionsbasis geeignet sind und zu den gewünschten Effekten führen.

In der Fachzeitschrift Resin Review 35 ,2 ist eine Dachbeschichtungsmasse beschrieben, die als Bindemittel eine Polyacrylatdispersion und neben Füllstoffen und weiteren Hilfsstoffen auch Hydroxyethylcellulose als Verdickungsmittel enthält. Diese Beschichtungsmasse wird als besonders auswaschresistent ausgelobt. Diese Eigenschaft wird jedoch auf das spezifische Abbindeverhalten der speziell für derartige Beschichtungsmassen entwickelten und eingesetzten Polyacrylatemulsionen zurückgeführt. Somit hat es für den Fachmann nicht nahegelegen, Hydroxyethylcellulose zur Verbesserung der Frühregenfestigkeit in Fugendichtungsmassen einzusetzen.

Darüber hinaus erfüllen Beschichtungsmassen nicht die Ansprüche, die an Fugendichtungsmassen gestellt werden. Dies sind insbesondere Anforderungen wie sie durch die DIN 52456 "Bestimmung der Verarbeitbarkeit von Dichtstoffen" sowie die DIN 52454 "Standvermögen" gefordert werden.

Insbesondere beim Standvermögen müssen Fugendichtungsmassen gegenüber den Beschichtungsmassen die Eigenschaft aufweisen, aus einem mit dieser Masse gefüllten U-Profil, welches nach dem Füllen in die Senkrechte gestellt wird, nicht oder nur geringfügig abzulaufen. Beschichtungsmassen sind in aller Regel niedrig-viskoser, da sie einerseits durch Spritzen oder Rollen auftragbar sein sollen und andererseits einen gewissen Verlauf zur Nivellierung der Masse zeigen sollen. Zwar kann man Fugendichtungsmassen als auch Beschichtungsmassen im Prinzip aus den gleichen Bestandteilen herstellen, auch sollte es möglich sein, durch Verdünnen einer Fugendichtungsmasse eine halbwegs brauchbare Beschichtungsmasse herzustellen, aber es lassen sich nicht zwingend in umgekehrter Weise Rückschlüsse ziehen.

Aus Ullmann, Enzyklopädie der technischen Chemie, 4. Auflage, Band 9, Verlag Chemie, Weinheim/Bergstraße 1974, Seite 208 - 209, ist bekannt, daß nichtionische Celluloseetherderivate wie Hydroxyethylcellulose (HEC), Hydroxyethyl-methylcellulose (HEMC) und Hydroxypropyl-methylcellulose (HPMC) in Kunststoffputzen und Dispersionsfarben u.a. zur Verbesserung des Wasserrückhaltevermögens, der Offenzeit, der Naßhaftung sowie des Andick- und Abbindeverhaltens eingesetzt werden. Dem kann jedoch der Fachmann keinen Hinweis darauf entnehmen, daß derartige Celluloseether in Fugendichtungsmassen zu einer Verbesserung der Streichfähigkeit, des Glättverhaltens und der Spritzwasserbeständigkeit der noch nicht erhärteten Oberflächen dieser Massen führen. Desweiteren repräsentieren Anstrichstoffe wie Dispersionsfarben sowie Kunststoffmörtel einen anderen Bereich der Technik, der nicht mit Fugendichtungsmassen vergleichbar ist. So lassen sich zwar Kunststoffputze möglicherweise zum Verfüllen von Fugen einsetzen, weisen jedoch im allgemeinen keine ausgesprochenen Dichtungseigenschaften aus und lassen sich im Gegensatz zu den Fugendichtungsmassen bei ihrer Applikation mit der Kelle portionieren und verarbeiten.

Aufgabe der Erfindung ist es, Fugendichtungsmassen auf Basis von Polymerdispersionen zur Verfügung zu stellen, die neben einem guten Glättverhalten eine Frühregenfestigkeit der nicht ausgehärteten Massen aufweisen, ohne daß andere erwünschte Eigenschaften wie Elastizitätsmodul, Bruchdehnung und Rückstellvermögen sowie Migrationsbeständigkeit und Koagulat- und Stippenfreiheit davon beeinträchtigt werden. Es war darüber hinaus Aufgabe der Erfindung, ein Verfahren bereitzustellen, das es möglich macht, derartige Massen zu produzieren.

Die Aufgabe wurde gelöst durch frühregenfeste Fugendichtungsmassen enthaltend
- wäßrige Polymerdispersionen (I)
- nicht-ionische Celluloseether (II) aus der von Hydroxyethyl-, Hydroxyethylmethyl-, Hydroxypropylmethyl- und Hydroxypropylcellulose gebildeten Gruppe
- gegebenenfalls übliche Zusätze wie Füllstoffe, Pigmente, Weichmacher, Extender, Verdickungsmittel, Entschäumer, Dispergierhilfsmittel, pH-Regulatoren, Konservierungs- und Alterungsschutzmittel sowie
- mindestens eine organische flüssige Komponente aus der Gruppe üblicher Zusätze
und herstellbar durch inniges Vermengen von (I) mit den übrigen Bestandteilen, dadurch gekennzeichnet, daß (II) in retardierter und/oder nicht retardierter Form in der flüssigen organischen Komponente aufgeschlämmt zugegeben und untergemischt wird.

Die einzelnen Bestandteile der Fugendichtungsmasse sind dem Fachmann als solche bekannt z.B. aus der DE 38 14 078-A-1. Weitere geeignete Polymerdispersionen für die Herstellung von Fugendichtungsmassen sind im Handel erhältlich und/oder sind dem Fachmann aus der Patent-und Fachliteratur bekannt z.B. aus E. Flick, Construction and structural adhesives and sealants, Noyes Publications, Park Ridge 1988 oder E. Flick, Adhesives and sealant compound formulations, Noyes Publications, Park Ridge 1978. Besonders vorteilhafte Fugendichtungsmassen enthalten Dispersionen von zur Filmbildung befähigten Polyacrylaten und/oder Acrylatcopolymeren. Vorteilhaft sind auch erfindungsgemäße Fugendichtungsmassen, die auf Dispersionen von zur Filmbildung befähigten Polymeren bzw. Copolymeren ausgewählt aus der von Ethylen/Vinylacetat-, Butadien/Styrol-, Vinylacetat/Maleinsäureester-, Silikon-, Urethan-, Vinylacetatmethacrylsäure/Chloropren-und Isopren-Polymeren bzw. -Copolymeren gebildeten Gruppe beruhen. Es können unterschiedliche Polymer-Dispersionen kombiniert werden. Auch Polysulfiddispersionen erweisen sich in Verbindung mit zur Filmbildung befähigten Polymeren als besonders geeignet. Der Einfachheit halber wird im folgenden Text nur von Polymer-Dispersionen gesprochen.

Die meisten Bestandteile sind handelsüblich. So sind sowohl retardierte als auch nicht retardierte Celluloseether im Handel erhältlich. Unter retardierte Celluloseethern versteht man solche, die in Wasser eingebracht gegenüber den unretardierten Substanzen verzögert anquellen. Dies wird z.B. durch eine Vernetzung mit Glyoxal an der Oberfläche der Celluloseetherteilchen erreicht, wie beispielsweise in der DE 24 15 556 beschrieben ist. Während es bisher üblich war, die genannten Celluloseether bereits in wäßriger Lösung oder in solchen Mengen einzubringen, die sich in dem in dem Massen bereits enthaltenen "freien" Wasser glatt lösen lassen, kennzeichnen sich die erfindungsgemäßen Fugendichtungsmassen durch ein neues Herstellungsverfahren bezüglich des Einbringens der Celluloseether.

Die erfindungsgemäß geeigneten Celluloseether werden in der flüssigen organischen Komponente aufgeschlämmt. Derartige Komponenten sind beispielsweise Weichmacher, Extender und/oder Netzmittel. Dabei können wahlweise retardierte und/oder nicht retardierte Celluloseether eingesetzt werden.

Die in den Fugendichtungsmassen der Erfindung enthaltenen wäßrigen Dispersionen weisen bevorzugt Feststoffgehalte von 40 bis 75, insbesondere 45 bis 65 Gew.-%, auf. Ihr pH-Wert kann mindestens 6, insbesondere 7 bis 9 betragen und wird, falls erforderlich, auf diese Werte eingestellt.

Die in den erfindungsgemäßen Fugendichtungsmassen enthaltenen Celluloseether haben bevorzugt als 2%-ige wäßrige Lösung bei 20°C Viskositäten nach Brookfield von mindestens 5.000 mPas. Bevorzugt werden solche mit einem Wert von mindestens 25.000 mPas also beispielsweise mittelviskose Hydroxyethylcellulosen. Besonders geeignet sind sogenannte hochviskose Celluloseethertypen, die einen entsprechenden Wert von mindestens 70.000 mPas aufweisen z.B. hochviskose Hydroxyethylcellulose. Handelsübliche hochviskose Hydroxyethylcellulose erzielt z.B. als 2%-ige Lösung bei 20°C schon eine Viskosität von 100.000 mPas.

Gemäß den Herstellerangaben sind bei Hydroxyethylcellulose z.B. bei Natrosol 250 HHR bei einer Viskosität oberhalb von 200.000 mPas vollständige Lösungen nicht mehr zu erzielen. Bei den weniger hydrophilen, erfindungsgemäß verwendbaren Celluloseether liegt diese Grenze noch niedriger, z.B. bei Hydroxypropylcellulose bei etwa 150.000 mPas oder bei Hydroxypropylmethylcellulose bei etwa 100.000 mPas. Mit höherer Konzentration bilden sich zunehmend gelartige Massen aus. Dies scheint jedoch eine besondere Rolle bei der Frühregenfestigkeit der erfindungsgemäßen Fugendichtungsmassen zu spielen. Auch wenn die genauen Zusammenhänge nicht geklärt sind, so läßt sich doch vermuten, daß beim Übersteigen dieser Löslichkeitsgrenze ein zunehmender Aufbau einer gelartigen Struktur mit dazu beiträgt, daß die Massen auch im nicht ausgehärteten Zustand durch Wasserbelastung wie Regen nicht oder nur wenig ausgewaschen werden.

In diesem Zusammenhang kommt es offenbar auf das Verhältnis der Mengen von Celluloseether zu "freiem" Wasser an, das ausschlaggebend dafür ist, ob diese Löslichkeitsgrenze überschritten wird oder nicht. Unter "freiem" Wasser wird hier der Wassergehalt der Dichtungsmasse verstanden, der den Celluloseethern zur Verfügung steht um sich darin zu lösen. Somit kann nicht der Gesamtwassergehalt der Fugendichtungsmasse für eine entsprechende Berechnung herangezogen werden. Vielmehr ist zu berücksichtigen, daß die anderen Bestandteile ebenfalls eine gewisse Menge Wasser beanspruchen, bzw. mehr oder weniger fest binden. So sind für die meisten Füllstoffe sogenannte Wasserwerte bekannt. Dieser beträgt beispielsweise bei Schwerspat 11 g Wasser pro 100 g Schwerspat. Für Kieselsäure z.B. für die Type HDK V 15 der Wacker-Chemie lassen sich Werte zwischen 350 bis 400 g Wasser pro 100 g Kieselsäure ermitteln. Derartige Werte bieten dem Fachmann einen Anhaltspunkt dafür, welche Mengen "gebundenen" Wassers er von dem Gesamtwassergehalt der Dichtmasse abziehen muß, um die Menge "freien" Wassers zu erhalten. Es ist es daher bevorzugt, daß diese Menge "freien" Wassers in Relation zu der Menge des jeweils eingesetzten Celluloseethertyps ein Verhältnis ergibt, das über der jeweiligen Löslichkeitsgrenze liegt.

Etwas komplizierter wird die Sachlage, wenn der Fachmann einen Wasserbedarf berücksichtigen muß, der sich ergibt, wenn die dispergierten Polymeren zur Salzbildung befähigte Gruppen enthalten. Ergibt sich ein derartiger zusätzlicher Wasserbedarf, muß der Fachmann gegebenenfalls entsprechende Herstellerangaben hinzuziehen, auf Grund von Erfahrungswerten diesen Bedarf abschätzen oder durch einfache Handversuche näherungsweise bestimmen. Soll eine Fugendichtungsmasse hergestellt werden, bei der die genannte Löslichkeitsgrenze überschritten wird, so kann die Zugabe der Celluloseether nicht wie üblich - also als Lösung - erfolgen. Mit dem erfindungsgemäßen Verfahren wird ein Weg aufgezeigt, derartige Fugendichtungsmassen herzustellen.

Weiterhin können in den Fugendichtungsmassen der Erfindung Füllstoffe in einer Menge von 0 bis 60, insbesondere 2 bis 60 Gew.-%, bezogen auf die Gesamtmasse der Fugendichtungsmassen, enthalten sein. Derartige Massen weisen, wenn sie keine oder nur sehr wenig Füllstoffe enthalten, eine hohe Transparenz auf. Niedrige Füllstoffgehalte können insbesondere bei solchen Massen vorliegen bei denen die Füllstoffe einen zusätzlichen verdickenden Effekt bewirken wie Kieselsäure. Werden nur Füllstoffe eingesetzt, die diesen zusätzlichen Effekt nicht aufweisen, liegt deren Gehalt meist zwischen 35 und 60 Gew.-%. Man spricht hier von hochgefüllten Massen.

Gemäß einer weiteren vorteilhaften Ausführungsform der Erfindung enthalten die Fugendichtungsmassen als Weichmacher chlorierte Kohlenwasserstoffe, insbesondere chlorierte Paraffine, und als Netzmittel nichtionische Tenside. Bevorzugt sind handelsübliche chlorierte Paraffine mit einer Kettenlänge von etwa 10 bis 18 Kohlenstoffatomen und einem Chlorgehalt von etwa 40 bis 70 Gew.-%.

In einer bevorzugten Ausführungsform enthalten die Fugendichtungsmassen
25 - 90 Gew.-% Polymerdispersion, bei hochgefüllten Fugendichtungsmassen insbesondere
25 - 40 Gew.-% Polymerdispersion,
0 - 60 Gew.-% insbesondere 2 bis 60 Gew.-% Füllstoffe
0 - 1 Gew.-% insbesondere 0,3 bis 0,5 Gew.-% Netzmittel
0 - 20 Gew.-% insbesondere 5 bis 15 Weichmacher und bis zu
10 Gew.-% insbesondere 4 bis 6 Gew.-% weitere übliche Zusätze wie Verdickungsmittel, Entschäumer und Pigmente

mindestens zum Aufschlämmen der Celluloseether ausreichende Mengen an organischer flüssiger Komponente und

bis zu

1,5 Gew.-% Celluloseether

- Gew.-%-Angaben jeweils bezogen auf die Gesamtmenge.

Dabei sollte der Celluloseethergehalt nicht viel weniger als 0,1 Gew.-% betragen. Gute Ergebnisse zeigen sich insbesondere bei Fugendichtungsmassen, bei denen unter Berücksichtigung der Rahmenparameter wie Celluloseethertyp und Gehalt an freiem Wasser der Celluloseethergehalt in einem Bereich von etwa 0,1 bis 0,5 Gew.-% bezogen auf die Gesamtmenge liegt.

Wie bereits erwähnt, werden die Celluloseether vor der Zugabe bei der Herstellung der erfindungsgemäßen Fugendichtungsmasse in der organischen flüssigen Komponente aufgeschlämmt. Dieses Verhältnis von Celluloseether zu Flüssigkeit liegt bevorzugt in einem Bereich von 1 : 2 bis 1 : 4, insbesondere bei etwa 1 : 3. Vorzugsweise wird als flüssiger organischer Bestandteil einer der übliche Zusätze für Fugendichtungsmassen eingesetzt wie z.B. Weichmacher, Extender und/oder Netzmittel. Desweiteren wird bevorzugt, bei der Herstellung die Zugabe der pH-Regulatoren, insbesondere der Basen, erst nach Zugabe der Celluloseether vorzunehmen. Dies ist insbesondere bei retardierten Celluloseethern von Vorteil, da im basischen Bereich die Retardierung schneller aufgehoben wird. Andererseits kann eine neutrale bis basische Einstellung der Fugendichtungsmassen sich günstig auf deren Stabilität, insbesondere auf deren Scherstabilität, auswirken.

Üblicherweise wird bei der Herstellung der erfindungsgemäßen Fugendichtungsmassen die Polymerdispersion vorgelegt. Es werden dann in einer bevorzugten Form des Verfahrens die üblichen Zusätze mit Ausnahme der pH-Regulatoren zugefügt und untergemischt. Anschließend erfolgt die Vermischung mit den in der organischen flüssigen Komponente aufgeschlämmten Celluloseethern und nach anschließendem Untermischen der Füllstoffe die Zumischung der pH-Regulatoren.

Es kann sich auch als vorteilhaft erweisen, wenn die Zugabe des Füllstoffs erst nach der Zugabe des pH-Regulators erfolgt.

Zur Vermeidung des Einrührens von Luft und der Bildung von Luftblasen im Produkt kann das Rühren unter Vakuum vorgenommen werden.

Die Verwendung der Fugendichtungsmassen erfolgt vorzugsweise bestimmungsgemäß. Sie sind insbesondere für die Verwendung in Bereichen geeignet, in denen sie Spritzwasser, Regen oder sonstiger Frühwasserbelastung ausgesetzt sind.

Die Erfindung wird im folgenden anhand bevorzugter Ausführungsbeispiele näher erläutert.

## Beispiele

Die in den Beispielen beschriebenen Massen sowie weitere, zu Vergleichszwecken hergestellte Massen wurden einem Auswaschungstest unterworfen, wobei eine Beregnungsapparatur gemäß der DE 38 14 078-A-1 Fig. 1 verwendet wurde; die gleiche Apparatur ist in Fig. 2 in Seitenansicht gezeigt.

Die Beregnungsapparatur bestand aus einem Gehäuse aus durchsichtigem Kunststoff mit den Abmessungen: Höhe 70 cm, Breite 60 cm und Tiefe 60 cm. Sie umfaßte ein Gehäuse 1, einen Brausenkopf 2, eine Probenschale 3, eine Pumpe 4, einen Bodenablauf 5 und einen Absperrhahn 6 für den Ablauf. Die Probenschale bestand aus einem Gefäß der Abmessung 7 x 7 cm und wies eine Tiefe von 2,5 cm auf. Bei dem Brausenkopf handelte es sich um eine übliche Handbrause, wie sie zur Körperpflege verwendet wird und die so eingestellt war, daß eine gleichmäßige Beregnung der Probe erfolgte. Der Abstand zwischen Probe 3 und Brausenkopf 2 betrug 30 cm.

Die Apparatur wurde mit demineralisiertem Wasser betrieben, wobei durch die Pumpe ein Überdruck von etwa 0,4 bar erzeugt wurde. Der Wasserdurchsatz betrug 300 l/h. Das Besprühen mit Wasser wurde 5 Minuten, jeweils 1 min nach dem Einfüllen und Glattstreichen der Oberfläche der zu prüfenden Massen, vorgenommen. Die Auswaschung (in Gew.-%) wurde durch Differenzwägung vor und nach dem Beregnen bestimmt.

Die Verarbeitbarkeit wurde nach DIN 52456 gemessen. Dabei wurde eine Bohrung von 4 mm, ein Druck von 2 bar und ein Prüfvolumen von 200 ml eingesetzt.

Die in den Beispielen beschriebenen Massen wurden weiterhin einem Test hinsichtlich ihres Glätteverhaltens unterzogen. Dieser Test wurde von 7 unabhängig arbeitenden Personen so durchgeführt, daß nach Auftragen eines 30 cm langen Massenstrangs auf eine glatte, ebene, dunkle Unterlage die Masse mit Spatel und Fingern geglättet wurde. Das Glätteverhalten wurde nach einer Notenskala von 1 ( = sehr gut) bis 6 ( =

ungenügend) beurteilt.

Beispiel 1

In einem Planetenmischer wurden die folgenden Bestandteile während etwa 45 Minuten intensiv gemischt:
1750 g wäßrige, handelsübliche Dispersion auf Basis eines Copolymerisats aus Vinylacetat und Ethylen (ungefähr 60 % Feststoff), mit einem pH-Wert von ca. 4,5 und einer Viskosität von etwa 1600 mPa.s bei 20°C (Handelsname: Vinnapas EP 17, Fa. Wacker),
250 g Chlorparaffin ($C_{12}$-$C_{14}$, 49 % Chlor),
2800 g Bariumsulfat (Handelsname: Schwerspat EWO),
100 g Titandioxid (Handelsname: KRONOS RN 56)
25 g Natriumcarbonat (technisch, reine Handelsware),
25 g Ethylenoxidaddukt (ungefähr 9,5 EO) an Nonylphenol,
5 g handelsübliches halogeniertes Konservierungsmittel,
37 g Hydroxyethylcellulose mit einer Viskosität von etwa 100.000 mPa.s einer 2 %-igen, wäßrigen Lösung bei 20°C und einem Hydroxyethylgruppengehalt von 55 Gew.-% (Handelsname: Natrosol 250 HHR).

Dabei wurde so vorgegangen, daß zunächst die Polymerdispersion vorgelegt wurde. Es wurden dann das Ethylenoxidaddukt (Emulgator), das Konservierungsmittel, das Titandioxid (Pigment) sowie ein Teil des Chlorparaffins hinzugegeben. In dem anderen Teil des Chlorparaffins wurde die Hydroxyethylcellulose aufgeschlämmt und ebenfalls zugegeben und das Ganze gut durchmischt. Es folgte die Untermischung des Natriumcarbonats als 10 %-ige wäßrige Lösung. Zum Schluß wurde das Bariumsulfat (Füllstoff) zugegeben und glattgerührt.

Diese Mischung wurde in 310 ml Kartuschen abgefüllt und war wenigstens ein Jahr bei Temperaturen bis 35°C lagerstabil.
Verarbeitbarkeit nach DIN 52456: 2300 g/min
Glättverhalten: gut
Auswaschung: 1 % Verlust.

Beispiel 2

Es wurde eine Zusammensetzung gemäß Beispiel 1 hergestellt, wobei anstelle der dort beschriebenen Dispersion eines Copolymeren von Vinylacetat und Ethylen 1750 g einer wäßrigen, handelsüblichen Dispersion auf Basis eines Copolymerisats aus Styrol und Butadien (ungefähr 64 % Feststoff) mit einem pH-Wert von ca. 10,5 und einer Viskosität von etwa 800 mPa.s bei 20°C (Handelsname: Polysar 2105, Fa. Hycar) eingesetzt wurden.

Diese Mischung wurde in 310 ml Kartuschen abgefüllt und war wenigstens ein Jahr bei Temperaturen bis 35°C lagerstabil.
Verarbeitbarkeit nach DIN 52456: 1980 g/min
Glättverhalten: gut
Auswaschung: 1 % Verlust.

Beispiel 3

Es wurde eine Zusammensetzung gemäß Beispiel 1 hergestellt, wobei anstelle der dort beschriebenen Dispersion eines Copolymeren von Vinylacetat und Ethylen 1750 g einer wäßrigen, handelsüblichen Dispersion auf Basis eines Copolymerisats aus Vinylacetat und Maleinsäure-di-n-butylester, Festkörpergehalt ca. 53 %, pH-Wert 4 bis 5, Viskosität (Brookfield, 20°C, 20 U/min) 1000 bis 3000 mPa.s, Handelsname Mowilith DM 2HB, Fa. Hoechst, eingesetzt wurden.

Die Mischung wurde in 310 ml Kartuschen abgefüllt und war wenigstens ein Jahr bei Temperaturen bis 35°C lagerstabil.
Verarbeitbarkeit nach DIN 52456: 2030 g/min
Glättverhalten: gut
Auswaschung: 1 % Verlust.

Beispiel 4

Es wurde eine Zusammensetzung gemäß Beispiel 1 hergestellt, wobei anstelle der dort beschriebenen Dispersion eines Copolymeren von Vinylacetat und Ethylen 1750 g einer wäßrigen, handelsüblichen Siliconemulsion (aus der Emulsion elastisch auftrocknend, ungefähr 45 % Feststoff), einem pH-Wert von ca. 5 und einer Dichte von etwa 1,0 bei 20° C, Handelsname: Wacker Siliconbautenschutzmittel, eingesetzt wurden.

Die Mischung wurde in 310 ml Kartuschen abgefüllt und war wenigstens ein Jahr bei Temperaturen bis 35° C lagerstabil.

Verarbeitbarkeit nach DIN 52456: 1790 g/min

Glättverhalten: gut

Auswaschung: 1 % Verlust.

Beispiel 5

Es wurde eine Zusammensetzung gemäß Beispiel 1 hergestellt, wobei anstelle der dort beschriebenen Dispersion eines Copolymeren von Vinylacetat und Ethylen 1750 g einer wäßrigen, handelsüblichen Dispersion eines Polysulfidpolymers, ungefähr 55 % Feststoff, pH-Wert 9 bis 10, Handelsname: ZW 2028, Fa. Thiokol, eingesetzt wurden.

Die Mischung wurde in 310 ml Kartuschen abgefüllt und war wenigstens ein Jahr bei Temperaturen bis 35° C lagerstabil.

Verarbeitbarkeit nach DIN 52456: 1790 g/min

Glättverhalten: gut

Auswaschung: 2 % Verlust.

Beispiel 6

Es wurde eine Zusammensetzung gemäß Beispiel 1 hergestellt, wcbei anstelle der dort beschriebenen Dispersion eines Copolymeren von Vinylacetat und Ethylen 1750 g einer wäßrigen, handelsüblichen Dispersion eines Polyurethanpolymers, ungefähr 40 % Feststoff, pH-Wert 7,0 bis 7,5, Viskosität 10.000 bis 18.000 mPa.s, Handelsname: VP-LA 3110, Fa. Henkel, eingesetzt wurden.

Die Mischung wurde in 310 ml Kartuschen abgefüllt und war wenigstens ein Jahr bei Temperaturen bis 35° C lagerstabil.

Verarbeitbarkeit nach DIN 52456: 1820 g/min

Glättverhalten: gut

Auswaschung: 3 % Verlust.

Beispiel 7

Es wurde eine Zusammensetzung gemäß Beispiel 1 hergestellt, wobei anstelle der dort beschriebenen Dispersion eines Copolymeren von Vinylacetat und Ethylen 1750 g einer wäßrigen, handelsüblichen Dispersion auf Basis eines Polyvinylacetats, ungefähr 50 % Feststoff, pH-Wert ca. 6 bis 7, Viskosität etwa 10.000 bis 18.000 mPa.s (Brookfield), Handelsname Mowilith DLR, Fa. Hoechst, eingesetzt wurden.

Die Mischung wurde in 310 ml Kartuschen abgefüllt und war wenigstens ein Jahr bei Temperaturen bis 35° C lagerstabil.

Verarbeitbarkeit nach DIN 52456: 1670 g/min

Glättverhalten: gut

Auswaschung: 1 % Verlust.

Beispiel 8

Es wurde eine Zusammensetzung gemäß Beispiel 1 hergestellt, wobei anstelle der dort beschriebenen Dispersion eines Copolymeren von Vinylacetat und Ethylen 1750 g einer wäßrigen, handelsüblichen Dispersion auf Basis eines Copolymerisats aus Chloropren und Methacrylsäure, ungefähr 46,5 bis 48,5 % Feststoff, pH-Wert ca. 9, Handelsname Neoprene Latex 115, eingesetzt wurden.

Die Mischung wurde in 310 ml Kartuschen abgefüllt und war wenigstens ein Jahr bei Temperaturen bis 35° C lagerstabil.

Verarbeitbarkeit nach DIN 52456: 2030 g/min

Glättverhalten: gut

Auswaschung: 1 % Verlust.

Beispiel 9

Es wurde eine Zusammensetzung gemäß Beispiel 1 hergestellt, wobei anstelle der dort beschriebenen Dispersion eines Copolymeren von Vinylacetat und Ethylen 1750 g einer wäßrigen, handelsüblichen Dispersion auf Basis eines Naturkautschuk-Latex, ungefähr 70 % Feststoff, pH-Wert ca. 9 bis 10, Handelsname Revertex Standard, eingesetzt wurden.

Diese Mischung wurde in 310 ml Kartuschen abgefüllt und war wenigstens ein Jahr bei Temperaturen bis 35° C lagerstabil.

Verarbeitbarkeit nach DIN 52456: 1740 g/min

Glättverhalten: gut

Auswaschung: 1 % Verlust.

Beispiel 10

Die Beispiele 1 bis 9 wurden nach Austausch der dort verwendeten Hydroxyethylcellulose durch eine handelsübliche Methylhydroxypropylcellulose (MHPC) mit einer Viskosität von etwa 20.000 mPa.s einer 2 %-igen Lösung bei 20° C nach Brookfield und einem Hydroxypropylgruppengehalt von 3,2 Gew.-% erneut gemessen. Die Ausspritzraten nach DIN 52456 sind vergleichbar. Das Glättverhalten ist mit gut zu beurteilen.

| Ergebnis: | |
|---|---|
| Zusammensetzung gemäß Beispiel Nr., jedoch mit MHPC | Auswaschung in % Verlust |
| 1 | 1,8 |
| 2 | 1,0 |
| 3 | 1,0 |
| 4 | 1,4 |
| 5 | 2,6 |
| 6 | 3,0 |
| 7 | 1,4 |
| 8 | 1,0 |
| 9 | 1,3 |

Beispiel 11.

Die Beispiele 1 bis 9 wurden nach Austausch der dort verwendeten Hydroxyethylcellulose durch eine handelsübliche Hydroxypropylcellulose (HPC) mit einer Viskosität von etwa 5000 mPa.s einer 2 %-igen Lösung bei 20° C nach Brookfield und einem Hydroxypropylgruppengehalt von 70 % erneut gemessen. Die Ausspritzraten nach DIN 52456 sind vergleichbar. Das Glättverhalten ist mit gut zu beurteilen.

| Ergebnis: | |
|---|---|
| Zusammensetzung gemäß Beispiel Nr., jedoch mit HPC | Auswaschung in % Verlust |
| 1 | 2,2 |
| 2 | 1,9 |
| 3 | 2,3 |
| 4 | 1,3 |
| 5 | 2,0 |
| 6 | 2,5 |
| 7 | 1,0 |
| 8 | 2,0 |
| 9 | 1,0 |

Vergleichsversuch A.

Die Beispiele 1 bis 9 wurden nach Austausch der Hydroxyethylcellulose (HEC) durch eine handelsübliche wäßrige Polyacrylsäuredispersion (ungefähr 25 % Feststoff, Handelsname: Rohagit SD 15) erneut gemessen. Die Ausspritzraten nach DIN 52456 waren vergleichbar. Das Glättverhalten ist mangelhaft; das Auswaschverhalten ist ungünstiger.

| Ergebnisse im Auswaschversuch: | |
|---|---|
| Zusammensetzung gemäß Beispiel Nr. (ohne HEC, mit Polyacrylsäuredispersion) | Auswaschung (in % Verlust) |
| 1 | 4 |
| 2 | 10 |
| 3 | 11 |
| 4 | 28 |
| 5 | 30 |
| 6 | 100 |
| 7 | 14 |
| 8 | 4 |
| 9 | 16 |

Vergleichsversuch B.

Die Beispiele 1 bis 9 wurden ohne Hydroxyethylcellulose (HEC) (Handelsname: Natrosol 250 HR) hergestellt. Das Glättverhalten ist mangelhaft; das Auswaschverhalten ist ungünstiger.

| Ergebnisse im Auswaschversuch: | |
|---|---|
| Zusammensetzung gemäß Beispiel Nr. (ohne HEC) | Auswaschung (in % Verlust) |
| 1 | 14 |
| 2 | 20 |
| 3 | 100 |
| 4 | 64 |
| 5 | 98 |
| 6 | 100 |
| 7 | 95 |
| 8 | 7 |
| 9 | 90 |

Beispiel 12

In einem Planetenmischer wurden die folgenden Bestandteile während insgesamt etwa 45 Minuten intensiv gemischt:

1750 g wäßrige, handelsübliche Polybutylacrylesterdispersion (ungefähr 62 % Feststoff), einem pH-Wert von 6,0 - 6,5, einer Glasübergangstemperatur Tg -50° C, einer Viskosität von etwa 250 mPas bei 23° C und einer mittleren Teilchengröße von 0,4 $\mu$m,

250 g Chlorparaffin ($C_{12}$-$C_{14}$, 49 % Chlor),

2800 g Bariumsulfat (Handelsprodukt: Schwerspat EWO),

100 g Titandioxid (Handelsprodukt KRONOS RN 56),

25 g Natriumcarbonat (techn. reine Handelsware),

25 g Ethylenoxidaddukt (ungefähr 9,5 EO) an Nonylphenol,

5 g handelsübliches halogeniertes Konservierungsmittel,

37 g Hydroxyethylcellulose mit einer Viskosität von etwa 4000 mPas einer 1 %-igen, wäßrigen Lösung bei 20° C und einem Hydroxyethylgruppengehalt von 55 Gew.-%, Handelsname: Natrosol 250 HHR.

Dabei wurde so vorgegangen, daß zunächst die Polymerdispersion vorgelegt wurde. Es wurden dann das Ethylenoxidaddukt (Emulgator), das Konservierungsmittel, das Titandioxid (Pigment) sowie ein Teil des Chlorparaffins hinzugegeben. In dem anderen Teil des Chlorparaffins wurde die Hydroxyethylcellulose aufgeschlämmt und ebenfalls zugegeben und das Ganze gut durchmischt. Es folgte die Untermischung des Natriumcarbonats als 10 %-ige wäßrige Lösung. Zum Schluß wurde das Bariumsulfat (Füllstoff) zugegeben und glattgerührt.

Diese Mischung wurde in 310 ml Kunststoffkartuschen abgefüllt und war wenigstens ein Jahr bei Temperaturen bis 35° C lagerstabil.

Verarbeitbarkeit nach DIN 52456: 2260 g/min

Glättverhalten: gut

Auswaschung: 1 % Verlust

Bei einem Zusatz von insgesamt 50 g derselben Hydroxyethylcellulose wurden folgende Ergebnisse gefunden:

Verarbeitbarkeit nach DIN 52456: 1300 g/min

Glättverhalten: sehr gut

Auswaschung: 0,3% Verlust

Beispiel 13

In einem Planetenmischer wurden die wie in Beispiel 12 aufgeführten Bestandteile während etwa 45 Minuten intensiv gemischt bei gleicher Vorgehensweise, wobei jedoch anstelle der Hydroxyethylcellulose:

20 g einer Hydroxypropylcellulose mit einer Viskosität von etwa 5000 mPas einer 2 %-igen, wäßrigen Lösung bei 20° C und einem Hydroxypropylgruppengehalt von 70 %, Handelsname Klucel M eingesetzt wurden.

EP 0 423 612 A1

Diese Mischung wurde in 310 ml Kunststoffkartuschen abgefüllt und war wenigstens bei Temperaturen bis 35° C lagerstabil.
Verarbeitbarkeit nach DIN 52456: 2100 g /min
Glättverhalten: gut
Auswaschung: 5 % Verlust

Beispiel 14

In einem Planetenmischer wurden die wie in Beispiel 12 aufgeführten Bestandteile während etwa 45 Minuten intensiv gemischt bei gleicher Vorgehensweise, wobei jedoch anstelle der Hydroxyethylcellulose 37 g einer Methylhydroxypropylcellulose mit einer Viskosität von etwa 20 000 mPas einer 2 %-igen, wäßrigen Lösung bei 20° C und einem Hydroxypropylgruppengehalt von 3,2 Gew.-%, Handelsname: Culminal MHPC 20000 PR eingesetzt wurden.

Diese Mischung wurde in 310 ml Kunststoffkartuschen abgefüllt und war wenigstens ein Jahr bei Temperaturen bis 35° C lagerstabil.
Verarbeitbarkeit nach DIN 52456: 2870 g/min
Glättverhalten: gut
Auswaschung: 3.5% Verlust

Beispiel 15

In einem Planetenmischer wurden die folgenden Bestandteile während etwa 45 Minuten intensiv gemischt.
4700 g wäßrige Dispersion eines Polyacrylsäurebutylesters mit geringen Mengen einpolymerisierten Acrylnitrils (60 % Feststoffgehalt), pH-Wert etwa 5 - 6,
52 g Ethylenoxidaddukt (ungefähr 9,5 EO) an Nonylphenol
25 g handelsübliches Silikon-KW-Entschäumergemisch
13 g handelsübliches phenolisches Konservierungsmittel (Parmetol, Schülke-Mayr, Hamburg)
102 g disperse Kieselsäure (Handelsprodukt HDK V 15, Wacker-Chemie)
36 g wäßrige Ammoniaklösung (25 %-ig)
52 g Chlorparaffin ($C_{10}$-$C_{14}$, 49 % Chlor)
18 g einer Hydroxyethylcellulose mit einer Viskosität von etwa 4000 mPas einer 1 %-igen, wäßrigen Lösung und einem Hydroxyethylgruppengehalt von 55 Gew.-%, Handelsname: Natrosol 250 HHR.

Dabei wurde so vorgegangen, daß zunächst die Dispersion vorgelegt wurde. Es wurden dann das Ethylenoxidaddukt (Emulgator), das Konservierungsmittel und der Entschäumer hinzugegeben. Im Chlorparaffin wurde die Hydroxyethylcellulose aufgeschlämmt und ebenfalls zugegeben und das ganze gut durchmischt. Es folgte die Untermischung der 25%-igen wäßrigen Ammoniaklösung. Zum Schluß wurde die disperse Kieselsäure (Füllstoff) zugegeben und glattgerührt.

Diese Mischung wurde in 310 ml Kunststoffkartuschen abgefüllt und war wenigstens ein Jahr bei Temperaturen bis 35° C lagerstabil.
Verarbeitbarkeit nach DIN 52456: 3700 g/min
Glättverhalten: gut
Auswaschung: 4,5 % Verlust

Beispiel 16

In einem Planetenmischer wurden die folgenden Bestandteile während insgesamt etwa 30 Minuten intensiv gemischt:
1200 g handelsübliche Dispersion eines Acrylsäureestercopolymerisats mit ungefähr 55 Gew.-% Feststoff und freien Carboxygruppen Handelsname: Primal E 1785
200 g Polybuten als Extender
20 g Ethylenoxidaddukt als Netzmittel
4 g handelsübliches halogeniertes Konservierungsmittel (AKTIZID TL 526)
200 g Butylbenzylphthalat als Weichmacher

11

EP 0 423 612 A1

200 g Wasser
80 g aliphatisches aromatenarmes Lösungsmittel (SHELLSOL D 60)
4 g Hydroxyethylcellulose hochviskos (NATROSOL 250 HHR)
2040g ungecoatete Kreide
40 g Titandioxid und
12 g 25%-ige wäßrige Ammoniaklösung
Verarbeitbarkeit nach DIN 52456: 1000 g/min
Glättverhalten: gut
Auswaschung: 4,3 % Verlust

Dabei wurde wie folgt verfahren, daß die Dispersion vorgelegt wurde, dann ein Teil des Polybutens, das Ethylenoxidaddukt, das Konservierungsmittel, der Weichmacher und das Wasser sowie das Lösungsmittel innig miteinander vermischt wurden. Der andere Teil des Polybutens wurde im Verhältnis von 3 : 1 mit der Hydroxyethylcellulose aufgeschlämmt und ebenfalls zugegeben und untergemischt und 5 Minuten gerührt. Anschließend wurde die Kreide und das Titandioxid eingearbeitet und 10 Minuten nachgerührt. Nach Zugabe des Ammoniaks wurde nochmals 15 Minuten unter Vakuum bei 40 mbar glattgerührt.

Beispiel 17

Es wurde eine Zusammensetzung gemäß Beispiel 1 hergestellt, wobei anstelle der dort beschriebenen Natrosol 250 HHR Type eine nichtretardierte hochviskose Hydroxyethylcellulose ansonsten gleicher Spezifikation eingesetzt wurde (Handelsname Natrosol 250 HH)
Verarbeitbarkeit nach DIN 52456: 2300 g/min
Glättverhalten: gut
Auswaschung: 1 % Verlust.

Vergleichsversuch C

a) Beispiel 12 wurde unter Weglassung der Hydroxyethylcellulose wiederholt:
23 % Auswaschung
b) Beispiel 12 wurde wiederholt, wobei anstelle der Hydroxyethylcellulose Carboxylmethylcellulose (DS 0,8, Viskosität 400 mPas in 2 %-iger, wäßriger Lösung bei 20 °C eingesetzt wurden:
27 % Auswaschung
c) Beispiel 15 wurde unter Weglassung von Hydroxyethylcellulose wiederholt:
20 % Auswaschung.

**Ansprüche**

1. Frühregenfeste Fugendichtungsmassen enthaltend
- wäßrige Polymerdispersionen (I)
- nicht-ionische Celluloseether (II) aus der von Hydroxyethyl-, Hydroxyethylmethyl-, Hydroxypropylmethyl- und Hydroxypropylcellulose gebildeten Gruppe
- gegebenenfalls übliche Zusätze wie Füllstoffe, Pigmente, Weichmacher, Extender, Verdickungsmittel, Entschäumer, Dispergierhilfsmittel, pH-Regulatoren, Konservierungs- und Alterungsschutzmittel sowie
- mindestens eine organische flüssige Komponente aus der Gruppe üblicher Zusätze
und herstellbar durch inniges Vermengen von (I) mit den übrigen Bestandteilen, dadurch gekennzeichnet, daß (II) in retardierter und/oder nicht retardierter Form in der flüssigen organischen Komponente aufgeschlämmt zugegeben und untergemischt wird.
2. Fugendichtungsmassen nach Anspruch 1, dadurch gekennzeichnet, daß sie Dispersionen von zur Filmbildung befähigten Polyacrylaten und/oder Acrylatcopolymeren enthalten.
3. Fugendichtungsmassen nach Anspruch 1, dadurch gekennzeichnet, daß sie Dispersionen von zur Filmbildung befähigten Polymeren bzw. Copolymeren ausgewählt aus der von Ethylen/Vinylacetat-, Butadien/Styrol-, Vinylacetat/Maleinsäureester-, Silikon-, Urethan-, Vinylacetatmethacrylsäure/Chlopren- und Isopren-Polymeren bzw. -Copolymeren gebildeten Gruppe enthält.
4. Fugendichtungsmassen nach einem der vorstehenden Ansprüche, dadurch gekennzeichnet, daß sie eine wäßrige Dispersion von Polysulfidpolymeren enthalten.

12

5. Fugendichtungsmassen nach einem der vorstehenden Ansprüche, dadurch gekennzeichnet, daß die wäßrigen Polymer- bzw. Copolymerdispersionen Feststoffgehalte von 40 bis 75 Gew.-%, insbesondere von von 45 bis 65 Gew.-% aufweisen.

6. Fugendichtungsmassen nach einem der vorstehenden Ansprüche, dadurch gekennzeichnet, daß Celluloseether enthalten sind, die in 2%-iger wäßriger Lösung bei 20°C Viskositäten nach Brookfield von mindestens 5000, insbesondere mindestens 25.000, vorzugsweise mindestens 70.000 mPas aufweisen.

7. Fugendichtungsmassen nach einem der vorstehenden Ansprüche, dadurch gekennzeichnet, daß das Verhältnis von Celluloseethern zu freiem Wasser so gewählt ist, daß eine vollständige Lösung der Celluloseether nicht mehr zu erzielen ist.

8. Fugendichtungsmassen nach einem der vorstehenden Ansprüche, dadurch gekennzeichnet, daß sie

25 - 90 Gew.-% Polymerdispersion, bei hochgefüllten Fugendichtungsmassen insbesondere

25 - 40 Gew.-% Polymerdispersion,

0 - 60 Gew.-% insbesondere 2 bis 60 Gew.-% Füllstoffe

0 - 1 Gew.-% insbesondere 0,3 bis 0,5 Gew.-% Netzmittel

0 - 20 Gew.-% insbesondere 5 bis 15 Weichmacher und bis zu

10 Gew.-% insbesondere 4 bis 6 Gew.-% weitere übliche Zusätze wie Verdickungsmittel, Entschäumer und Pigmente

mindestens zum Aufschlämmen der Celluloseether ausreichende Mengen an organischer flüssiger Komponente und bis zu

1,5 Gew.-% Celluloseether

- Gew.-%-Angaben jeweils bezogen auf die Gesamtmenge -enthalten.

9. Fugendichtungsmassen nach einem der vorstehenden Ansprüche, dadurch gekennzeichnet, daß bei deren Herstellung die Celluloseether in aufgeschlämmter Form in einem Verhältnis von 1 : 2 bis 1 : 4, insbesondere etwa 1 : 3, zu der flüssigen Komponente der Aufschlämmung eingesetzt werden.

10. Fugendichtungsmassen nach einem der vorstehenden Ansprüche, dadurch gekennzeichnet, daß bei deren Herstellung die Zugabe der pH-Regulatoren, insbesondere Basen, nach Zugabe der Celluloseether erfolgt.

11. Verfahren zur Herstellung von Fugendichtungsmassen nach vorstehenden Ansprüchen, dadurch gekennzeichnet, daß die Polymerdispersion vorgelegt wird, die üblichen Zusätze mit Ausnahme der pH-Regulatoren untergemischt werden, dann die Vermischung mit den in der flüssigen organischen Komponente z.B. im Weichmacher aufgeschlämmten Celluloseether erfolgt und nach anschließendem Untermischen der Füllstoffe die Zumischung der pH-Regulatoren erfolgt.

12. Verfahren zur Herstellung von Fugendichtungsmassen nach Anspruch 11, dadurch gekennzeichnet, daß die Zugabe des Füllstoffs nach der Zugabe des pH-Regulators erfolgt.

13. Verwendung der Fugendichtungsmassen als solche insbesondere in Bereichen, in denen die Fugendichtungsmassen Spritzwasser oder Regen ausgesetzt sein können.

**Europäisches Patentamt**

**EUROPÄISCHER RECHERCHENBERICHT**

Nummer der Anmeldung

**EP 90 11 9449**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,D,A | EP-A-0 339 427  (HENKEL KGAA) <br> * Anspruch 1 * <br><br> – – – – – | 1 | C 09 <br> D 5/34 <br> C 08 J 3/07 |
| | | | **RECHERCHIERTE SACHGEBIETE (Int. Cl.5)** <br><br> C 09 D <br> C 08 J <br> C 09 K <br> C <br> 08 L |

Der vorliegende Recherchenbericht wurde für alle Patentansprüche erstellt

| Recherchenort | Abschlußdatum der Recherche | Prüfer |
|---|---|---|
| Den Haag | 14 Januar 91 | SCHUELER D.H.H. |